Europäisches Patentamt

European Patent Office

Office européen des brevets

(11) Publication number : **0 510 876 A2**

## (12) EUROPEAN PATENT APPLICATION

(21) Application number : **92303445.8**

(22) Date of filing : **16.04.92**

(51) Int. Cl.⁵ : **G11B 27/30, G11B 27/10, G11B 27/22**

(30) Priority : **22.04.91 JP 119333/91**

(43) Date of publication of application :
**28.10.92 Bulletin 92/44**

(84) Designated Contracting States :
**DE FR GB**

(71) Applicant : **SONY CORPORATION**
**7-35, Kitashinagawa 6-chome Shinagawa-ku
Tokyo (JP)**

(72) Inventor : **Tanaka, Masato**
**c/o Sony Corporation, 7-35 Kitashinagawa
6-chome**
**Shinagawa-ku Tokyo (JP)**
Inventor : **Himeno, Takuji**
**c/o Sony Corporation, 7-35 Kitashinagawa
6-chome**
**Shinagawa-ku Tokyo (JP)**

(74) Representative : **Nicholls, Michael John**
**J.A. Kemp & Co., 14, South Square, Gray's Inn
London WC1R 5LX (GB)**

(54) **Audio signal recording apparatus having music-absence/presence detecting means.**

(57)   An audio signal recording and/or reproducing apparatus compares an audio signal with a plurality of threshold levels different from each other. Music-absent information is obtained according to the comparison result or music-present information including a plurality of threshold levels is generated. In a case where a music-absent portion and a music-present portion are predetermined the music-absent information and the music-present information not less than the maximum threshold level are generated according thereto, these being recorded on a recording medium concurrently with the audio signal, therefore the music-absent information and the music-present information can be recorded securely at all times irrespective of a level of the audio signal.

FIG. 3

This invention relates to an audio signal recording and/or reproducing apparatus and is more particularly suitable for applying to digital audio tape recorder.

Hitherto, there has been a digital audio tape recorder (DAT) having a so-called AMS (automatic music search) function by which starts (or "the tops") of programs of a recorded audio signal can be located automatically.

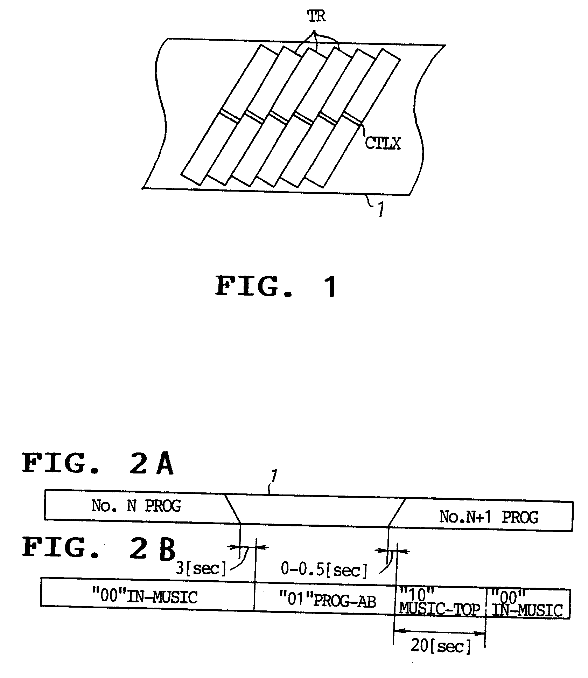

That is, as shown in FIG. 1 of the accompanying drawings, information necessary for location is recorded as a 2-bit AMS flag on a control block CTLX formed centrally of a helical recording track TR on a magnetic tape 1.

As the AMS flag practically, as shown in FIG. 2, a flag (hereinafter called in-music flag (FIG. 2B) comprising a value "00" indicating that the number N program (FIG. 2A) is in music for about 3 [sec] after the end of the number N program in an audio signal is recorded, and a flag (hereinafter called music-absent flag) comprising a value "01" indicating that there is no music from the end of the in-music flag to a point of time after the beginning of the number N+1 program continuing thereto for 0 to 0.5 [sec] thereafter is recorded.

In succession, a flag (hereinafter called music-top flag) comprising a value "10" indicating the beginning of a program or the top of a program for about 20 [sec] from the beginning of the number N+1 program is recorded, and then an in-music flag is recorded consecutively.

When reproducing the magnetic tape 1 in which the AMS flags comprising the in-music flag, the music-absent flag and the music-top flag each as mentioned above are recorded together with the audio signal, a desired music can be located and reproduced immediately by counting, for example, the number of music-top flags from top of the magnetic tape 1.

Further, the desired music can easily be reproduced again or repeatedly by carrying out a rewinding up to the music-top flag at a timing when the desired music ends or at a timing when inputted for operation.

In the digital audio tape recorder (DAT), such AMS flags comprising in-music flag, music-absent flag and music-top flag each are made to arise according to a change in level of the audio signal while the audio signal is recorded.

From such arrangement, however, when detecting a silent level of the audio signal, a break of the music may in practice not coincide with the AMS flags comprising the in-music flag, the music-absent flag and the music-top flag each according to a threshold level.

That is, a problem is such that if a threshold level of the silent level is set at, for example, -50 [dB] with reference to a full scale of the audio signal, a silent portion may not be detected in a music source with much noise, or if a classic music in a compact disc is recorded on the contrary, then the music-top flag is set often in a piece of music or in a movement.

Thus, if the break of a music does not coincide with the AMS flags comprising the in-music flag, the music-absent flag and the music-top flag each, the aforementioned locating playback and repeat playback cannot be carried out correctly, thus resulting in an insufficient serviceability to users.

To solve this problem, it is conceivable that a level of the audio signal is monitored during locating operation at the time of playback as in the case of a conventional analog audio tape recorder, and a threshold level of the silent level is set arbitrarily to a level of, for example, -40, -50 and -60 [dB] with reference to the full scale.

However, in the case of DAT, in addition to a problem in which an oversight due to a read skipping of data is unavoidable consequently during a locating search, a signal processing itself in the locating search becomes complicated, and no solution to this has been found.

In view of the foregoing, an object of this invention is to provide an audio signal recording and/or reproducing apparatus to solve the problems prevailing hitherto and thus capable of improving a serviceability for users at the time of locating process and so forth.

The foregoing object and other objects of the invention have been achieved by the provision of an audio signal recording apparatus for recording an audio signal on a predetermined recording medium, the arrangement is such that the audio signal to be inputted is compared on a plurality of threshold levels different from each other, music-absent information is generated when the audio signal is not more than the minimum threshold level of the threshold levels, music-present information according to the signal level of audio signal detected on the basis of the threshold levels is generated when the audio signal is no less than any of the threshold levels, the music-absent information or the music-present information is recorded on the recording medium together with the audio signal.

In a second aspect of the invention, the arrangement is such that in a case where a music-absent portion and a music-present portion of the audio signal to be inputted are predetermined, music-absent information is generated for the music-absent portion, and music-present information other than the music-present information generated on the basis of those threshold levels is generated for the music-present portion.

Further in a third aspect the invention, the arrangement is such that in an audio signal reproducing apparatus for reproducing the recording medium on which music-present information and music-absent information including those threshold levels are recorded together with the audio signal, a threshold level preset and a reproducing threshold level of the music-present information obtained from reproducing the recording medium are compared with each other, and a music-present portion is discriminated according to the comparison result.

The audio signal is compared on a plurality of threshold levels different from each other, the music-absent information obtained according to the comparison result or the music-present information corresponding to the input audio signal detected on the basis of the threshold levels is generated, and in a case where a music-absent portion and a music-present portion of the audio signal to be inputted are predetermined, the music-absent information is generated for the music-absent portion, the music-present information other than the other music-present information generated on the basis of a plurality of threshold levels is generated for the music-present portion, these being recorded on the recording medium 1 concurrently with the audio signal, therefore the music-absent information and the music-present information can be recorded securely at all times irrespective of a level of the audio signal.

Further, when reproducing the recording medium on which the music-present information and the music-absent information based on a plurality of threshold levels are recorded together with the audio signal, the music-present portion is discriminated through a comparison of a preset threshold level with a reproducing threshold level of the music-present information, therefore the music-present portion can be detected according to the audio signal, thus improving a serviceability of users.

The nature, principle and utility of the invention will become more apparent from the following detailed description given by way of example only when read in conjunction with the accompanying drawings in which like parts are designated by like reference numerals or characters.

In the accompanying drawings:

FIG. 1 is a schematic diagram serving for illustrating a recording track and a control block on the magnetic tape;

FIGS. 2A and 2B are schematic diagrams serving for illustrating a recording operation by a prior art audio signal recording apparatus;

FIG. 3 is a block diagram representing one embodiment of an audio signal recording apparatus according to the present invention;

FIG. 4 is a table serving for illustrating contents of an AMS flag recorded on a magnetic tape of the audio signal recording apparatus;

FIGS. 5A and 5B are schematic diagrams serving for illustrating a recording operation of the AMS flag by the audio signal recording apparatus; and

FIG. 6 is a block diagram representing one embodiment of an audio signal reproducing apparatus according to the present invention.

Preferred embodiments of this invention will be described with reference to the accompanying drawings:

Embodiment of Audio Signal Recording Apparatus

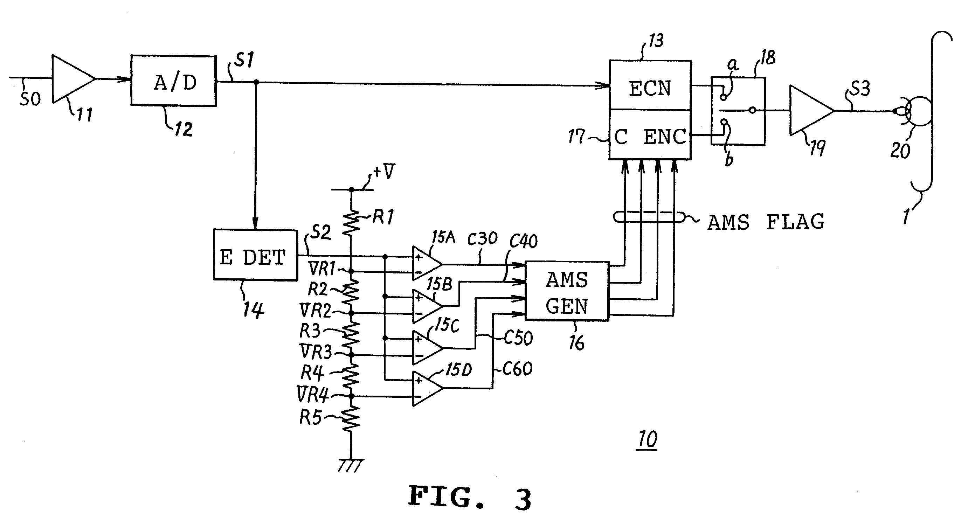

In FIG. 3, a reference numeral 10 denotes a recording system of a digital audio tape recorder (DAT) to which an audio signal recording apparatus according to the present invention is applied as a whole, an inputted analog audio signal S0 is supplied to an analog-to-digital converter 12 by way of an input buffer 11, and a digital audio signal S1 thus obtained is inputted to an encoder 13 and an envelope detection circuit 14.

The envelope detection circuit 14 detects an envelope of the digital audio signal S1, and an envelope signal S2 of the digital audio signal S1 thus obtained is inputted in common to non-inversional input ends of comparators 15A, 15B, 15C and 15D constructed of an.operational amplifier each.

first, second, third and fourth reference voltages VR1, VR2, VR3 and VR4 obtained from connection nodes of resistances R1, R2, R3, R4 and R5 connected between a power source +V and a ground are inputted to inversional input ends of the comparators 15A to 15D.

In the case of this embodiment, the first, second, third and fourth reference voltages VR1, VR2, VR3 and VR4 are set to a voltage level according to threshold levels, for example, -30, -40, -50 and -60 [dB] with reference to a full scale level of the audio signal S1.

Thus the comparators 15A to 15D compare the envelope signal S2 of the digital audio signal S1 with the first to fourth reference voltages VR1 to VR4 respectively, and send comparison results C30, C40, C50 and C60 thus obtained to an AMS generation circuit 16.

The AMS generation circuit 16 is constructed of a microcomputer, decides whether or not the envelope signal S2 of the digital audio signal S1 is not more than the threshold levels -30, -40, -50 and -60 [dB] according to logical levels of the comparison results C30, C40, C50 and C60, and generates the AMS flag according to the decision result.

The AMS flag thus obtained from the AMS generation circuit 16 is inputted to a control data encoder 17, encoded together with other control data recorded in the control block CTLX (FIG. 1) on the magnetic tape 1 and is then inputted to a second input end b of a recording selector circuit 18.

A digital audio signal encoded by the encoder 13 is inputted to a first input end a of the recording selector circuit 18, and the recording circuit 18 selects practically the second input end b during the middle period of the recording tracks TR according to the control block CTLX and selects the first input end a during the other period according to a control of system control circuit (not indicated).

Thus a recording signal S3 to be recorded on the magnetic tape 1 is generated and supplied to a magnetic head 20 through a recording amplifier circuit 19, and thus an analog audio signal S0 is recorded digitally on the magnetic tape 1, and the AMS flag can be recorded at the same time.

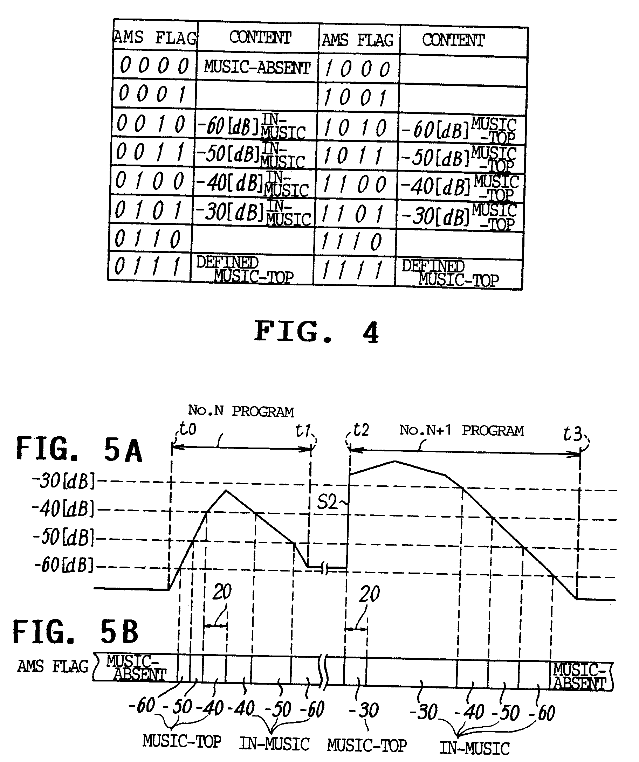

Here in the case of this embodiment, as shown in FIG. 4, the AMS flag is assigned in the control block CTLX as 4-bit data, and when practically the 4-bit data comes in "0000", it indicates a music-absent flag, namely a silent portion.

Further, when lower 3 bits of the 4-bit data of the AMS flag is "010", it indicates a -60 [dB] in-music flag, and when practically the threshold level is -60 [dB], a music is present as the envelope signal S2 not less than the threshold level.

Similarly when the lower 3 bits of the 4-bit data of the AMS flag are "011", "100" and "101", it indicates -50 [dB] in-music flag, -40 [dB] in-music flag and -30 [dB] in-music flag respectively, and practically when the threshold levels are -50 [dB], -40 [dB] and -30 [dB] each, a music is present as the envelope signal S2 not less than the threshold levels.

Then in the case of this embodiment, the lower 3 bits of the 4-bit data of the AMS flag is "111", it comprises a defined in-music flag indicating that the in-music portion has been preset like a soft tape.

Still further, in the case of this embodiment, with the threshold levels as -60 [dB], -50 [dB], -40 [dB], and -30 [dB] each, an upper 1 bit of the 4-bit data of the AMS flag is set at "1" for 20 seconds at a timing when shifting newly to the music-present portion from the silent portion not more than the threshold levels.

Accordingly, when the 4-bit data of the AMS flag is "1010", "1011", "1100", "1101" and "1111" each, these values indicate -60 [dB] music-top flag, -50 [dB] music-top flag, -40 [dB] music-top flag, -30 [dB] music-top flag and defined music-top flag, respectively.

In the above construction, where, for example, the envelope signal S2 of the inputted digital audio signal S1 has a signal waveform wherein number N program from the point in time t0 to the point in time t1 rises smoothly and falls, and number N+1 program from the point in the time t2 to the point in time t3 rises abruptly and falls smoothly, as shown in FIG. 5A, the AMS flag is recorded as shown in FIG. 5B.

That is, the music-absent flag is recorded while the envelope signal S2 is not more than -60 [dB], the -60 [dB] music-top flag is recorded while it comes between -60 [dB] and -50 [dB], the -50 [dB] music-top flag is recorded while it comes between -50 [dB] and -40 [dB].

In the number N program portion of the envelope signal S2, since it rises and falls between -40 [dB] and -30 [dB], the -40 [dB] music-top flag is recorded for 20 seconds from -40 [dB] to -30 [dB], and the -40 [dB] in-music flag is recorded consecutively.

Further, the number N program portion of the envelope signal S2 falls gradually, the -50 [dB] in-music flag is recorded between -40 [dB] and -50 [dB], and since the envelope signal S2 is present between -50 [dB] and -60 [dB] between the number N and the number N+1 programs, the -60 [dB] in-music flag is recorded.

Then the number N+1 program portion of the envelope signal S2 rises so abruptly not less than -30 [dB] at a timing of the point in time t2, therefore the -30 [dB] in-music flag is recorded after the -30 [dB] music-top flag is recorded for the first 20 seconds, and then the -40 [dB] in-music flag, the -50 [dB] in-music flag, the -60 [dB] in-music flag and the music-absent flag are recorded successively according to a fall of the envelope signal S2.

According to the aforementioned construction, the envelope signal S2 of the digital audio signal S1 according to the inputted analog audio signal S0 is compared on a plurality of threshold levels comprising -60 [dB], -50 [dB], -40 [dB] and -30 [dB], a music-absent flag obtained according to the comparison result or a in-music flag and a music-top flag including each threshold level are generated, and recorded on the magnetic tape 1 concurrently with the digital audio signal S1, therefore the digital audio tape recorder (DAT) 10 capable of recording the AMS flag accurately at all times correspondingly to various recording circumstances may be realized.

Further according to the aforementioned construction, in a case where, for example, a music-absent program portion and a music-present program portion of the audio signal to be inputted are predetermined like a soft tape, a music-absent flag is generated according to the musicless portion, a defined in-music flag or a defined music-top flag is generated according to the music-present portion, these being recorded on the magnetic tape 1 together with the digital audio signal S1, therefore the DAT 10 capable of recording the AMS flag securely may be realized. Embodiment of Audio Signal Reproducing Apparatus

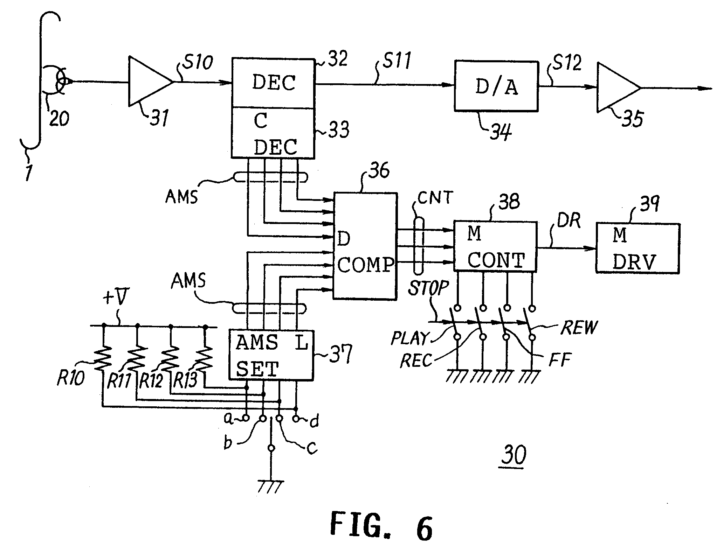

In FIG. 6 wherein like reference characters represent like portions of FIG. 3, a reference numeral 30 denotes a reproducing system of the digital audio tape recorder (DAT) to which an audio signal reproducing apparatus according to the present invention is applied as a whole, and an arrangement is such that the magnetic tape 1 on which the AMS flag is recorded concurrently with the digital audio signal S1 is reproduced by the aforementioned recording system of the DAT 10.

That is, the magnetic tape 1 is subjected to a helical scanning by the magnetic head 20, and a reproducing signal S10 obtained thereby a reproducing amplifier circuit 31 is inputted to a decoder 32 and a control data decoder 33.

Then a reproducing digital audio signal S11 obtained through the decoder 32 is inputted to a digital-to-analog converter 34 to digital-to-analog conversion, and is sent as a reproducing audio signal S12 through an output amplifier circuit 35.

Then in the control data decoder 33, the reproducing signal S10 is decoded at a timing of the control block CTLX, and a reproducing AMS flag comprising 4-bit data thus obtained is inputted to a digital comparator 36.

In addition thereto, an AMS level set from users by an AMS level setting circuit 37 is inputted to the digital comparator 36. Four input ends a, b, c and d connected to the power source +V through pull-up resistors R10, R11, R12 and R13 respectively are connected to the AMS level setting circuit 37, and any of the input ends a, b, c and d connected according to a transfer operation of users becomes a logical "L" level.

Practically in the AMS level setting circuit 37, when the input end a, b, c or d is selected, it is decided that -60 [dB], -50 [dB], -40 [dB] or -30 [dB] has been set as a threshold level, and a value "0010", "0011", "0100" or "0101" is generated as 4-bit data according to the threshold level.

Thus the digital comparator 36 compares lower 3 bits of the AMS level set from users with lower 3 bits of the reproducing AMS flag included in the reproducing signal S10, generates a control signal CNTX according to the comparison result, and sends it to a mechanical control circuit 38 in microcomputer configuration.

A playback key PLAY, a record key REC, a fast forward key FF, a rewind key REW and a stop key STOP are connected to the mechanical control circuit 38, which sends a driving signal DR for controlling a mechanical driving circuit 39 according to a user's operation and then the operating state.

In the aforementioned construction,for reproducing the magnetic tape 1 with, for example, the AMS flag recorded thereon as shown in FIG. 5, if a user specifies a setting AMS level comprising -40 [dB] as the threshold level and carries out a locating operation for the number N program from the first, then the mechanical control circuit 38 sends the driving signal DR for carrying out a fast forward playback to the mechanical driving circuit 39.

As a result the DAT 30 is controlled entirely to a fast forward playback mode, and in this case the digital comparator 36 compares the reproducing AMS flag included in the reproducing signal S10 obtained during the fast forward playback with the setting AMS level specified by users.

That is, in the digital comparator 36, where the reproducing AMS flag obtained from reproducing the magnetic tape 1 is like FIG. 5B, the control signal CNTX for keeping the fast forward playback is sent during the period of music-absent flag,-60 [dB] music-top flag, and -50 [dB] music-top flag.

Consecutively, when detecting that the reproducing AMS flag obtained from reproducing the magnetic tape 1 is the -40 [dB] music-top flag, the digital comparator 36 generates a music-top detection signal, counts up an internal counter indicating an order of number, and then decides whether or not it is N number on the internal counter.

In such state when detecting a music-top of the number N program, the digital comparator 36 closes the fast forward playback mode against the mechanical control circuit 38, and sends the control signal CNTX for shifting to an ordinary playback mode, thereby controlling the mechanical driving circuit 39 from the fast forward playback mode to the ordinary playback mode.

In the case of the DAT 30, an arrangement is such that a music of the number N program is located from the top on -40 [dB] threshold level in accordance with a user's operation and then reproduced.

Further in the DAT 30, when reproducing that with a music source having less noise and small sound volume portion more than one like, for example, a classic music of the compact disc recorded on the magnetic tape 1, users may set the threshold level at, for example, -60 [dB].

Thus, a locating playback is carried out according to -60 [dB] music-top flag as in the case mentioned above, and an existence of a music can be detected securely for the small sound volume portion.

Further in the DAT 30, the AMS flag comprising a defined in-music flag and a defined music-top flag is recorded on the magnetic tape 1, a music-top will be detected securely and a locating playback can be carried out on any threshold level that users select.

According to the above-described construction, for locating playback of the magnetic tape 1 with the AMS flag according to a plurality of threshold levels recorded thereon, the setting AMS flag comprising a threshold level set by users is compared with the reproducing AMS flag, thereby realizing the DAT 30 ready for locating playback.

Further according to the above-described construction, instead of a prior art locating playback for comparing the level of a reproducing audio signal with the set threshold level at the time of reproducing, the magnetic tape 1 on which the AMS flag according to a plurality of threshold levels is recorded is used, thereby realizing the DAT 30 ready for locating playback accurately.

Other Embodiments

In the above-described embodiment, a level -60 [dB], -50 [dB], -40 [dB] or -30 [dB] is used as plural threshold level with reference to a full scale of the audio signal at the time of recording and reproducing, however, the threshold level is not necessarily limiter thereto, and various levels .may be used as occasion demands.

Further in the above-descried embodiment, the description has referred to the case where the present invention is applied to a digital audio tape recorder, however, the present invention is not necessarily limited thereto, and hence is applicable extensively to various audio signal recording apparatuses and audio signal reproducing apparatuses such as, for example, audio system of optical disc device and video tape recorder and the like.

As described above, according to the present invention, an audio signal is compared on a plurality of threshold levels different each other, music-absent information obtained according to the comparison result or music-present information including a plural threshold level is generated, and in a case where a music-absent program portion and a music-present program portion of the audio signal to be inputted are predetermined, the music-absent information is generated for the music-absent program portion, the music-present information including a new threshold level coming not less than the maximum threshold level of those threshold levels is generated for the music-present program portion, these being recorded on a recording medium concurrently with the audio signal, therefore an audio signal recording apparatus capable of recording the music-absent information or the music-present information securely at all times irrespective of a level of the audio signal may be realized.

Further, when reproducing the recording medium on which the music-present information and the music-absent information including a plurality of threshold levels are recorded together with the audio signal, the music-present program portion is searched through a comparison of a set input threshold level with a reproducing threshold level of the music-present information, therefore the music-present program portion can be searched according to the audio signal, thus realizing an audio signal reproducing apparatus capable of improving a serviceability of users.

While there has been described in connection with the preferred embodiments of the invention, it will be obvious to those skilled in the art that various changes and modifications may be made therein without departing from the invention, and it is aimed, therefore, to cover in the appended claims all such changes and modifications as fall within the true scope of the invention.

## Claims

1. An audio signal recording apparatus for recording an audio signal on a predetermined recording medium, comprising:

   a level comparison means for comparing an inputted audio signal with a plurality of threshold levels different from each other;

   first signal generation means for generating music-absent information when said audio signal is not more than a minimum threshold level of said plural threshold levels;

   second signal generation means for generating music-present information corresponding to the signal level of said audio signal detected on the basis of said plural threshold levels, when said audio signal is more than said minimum threshold level; and

   signal record means for recording said music-absent information generated by said first signal generation means and said music-present information generated by said second signal generation means together with said audio signal on said recording medium.

2. The audio signal recording apparatus according to claim 1, wherein in a case where a music-absent portion and a music-present portion of said audio signal inputted is predetermined, said music-absent information is generated in relation to said music-absent portion, and new music-present information other than music-present information generated in correspondence with the level of said audio signal which is detected on the basis of said plural threshold levels is generated in relation to said music-present information of said music-present portion.

3. An audio signal reproducing apparatus for reproducing a recording medium on which music-present information and music-absent information to be generated on the basis of a plurality of threshold levels are recorded together with an audio signal, comprising:

   a level comparison means for comparing a predetermined threshold level and a reproduced threshold level of said music-present information obtained by reproducing said recording medium; and

   a discrimination means for discriminating said music-present portion on the basis of said comparison result.

4. An audio signal recording method for recording an audio signal on a predetermined recording medium, comprising the steps of:

   comparing an inputted audio signal with a plurality of threshold levels different from each other;

   generating music-absent information, when said audio signal is not more than a minimum threshold level of said plural threshold levels;

   generating music-present information corresponding to the signal level of said audio signal detected on the basis of said plural threshold levels, when said audio signal is more than said minimum threshold level; and

   recording said music-absent information generated with said music-absent information generating step and said music-present information generated with said music-present information generating step together with said audio signal on said recording medium.

# FIG. 1

# FIG. 2 A

| No. N PROG | | No.N+1 PROG |

# FIG. 2 B

3[sec]          0-0.5[sec]

| "00"IN-MUSIC | "01"PROG-AB | "10"MUSIC-TOP | "00"IN-MUSIC |

20[sec]

FIG. 3

| AMS FLAG | CONTENT | AMS FLAG | CONTENT |
|---|---|---|---|
| 0 0 0 0 | MUSIC-ABSENT | 1 0 0 0 | |
| 0 0 0 1 | | 1 0 0 1 | |
| 0 0 1 0 | -60[dB] IN-MUSIC | 1 0 1 0 | -60[dB] MUSIC-TOP |
| 0 0 1 1 | -50[dB] IN-MUSIC | 1 0 1 1 | -50[dB] MUSIC-TOP |
| 0 1 0 0 | -40[dB] IN-MUSIC | 1 1 0 0 | -40[dB] MUSIC-TOP |
| 0 1 0 1 | -30[dB] IN-MUSIC | 1 1 0 1 | -30[dB] MUSIC-TOP |
| 0 1 1 0 | | 1 1 1 0 | |
| 0 1 1 1 | DEFINED MUSIC-TOP | 1 1 1 1 | DEFINED MUSIC-TOP |

## FIG. 4

**FIG. 5A**

No.N PROGRAM    No.N+1 PROGRAM

t0    t1    t2    t3

-30[dB]
-40[dB]
-50[dB]
-60[dB]

S2

20    20

**FIG. 5B**

AMS FLAG  MUSIC-ABSENT          MUSIC-ABSENT

-60 -50 -40 -40 -50 -60  -30  -30 -40 -50 -60

MUSIC-TOP    IN-MUSIC    MUSIC-TOP    IN-MUSIC

FIG. 6